# EUROPÄISCHE PATENTANMELDUNG

(11) **EP 1 391 363 A1**
(43) Veröffentlichungstag der Anmeldung: **25.02.2004**
(21) Anmeldenummer: 03014346.5
(22) Anmeldetag: 26.06.2003
(51) Int. Cl.: B60T 15/18

(54) **Proportional-Relaisventil**

(30) Priorität: 21.08.2002 DE 10238182
(71) Anmelder: WABCO GmbH & Co. OHG, 30432 Hannover (DE)
(72) Erfinder: König, Heinz-Werner, 30890 Barsinghausen (DE); Kiel, Bernd, 31515 Wunstorf (DE); Dreyer, Werner, 30826 Garbsen (DE); Schappler, Hartmut, 30455 Hannover (DE)
(74) Vertreter: Schrödter, Manfred

(57) **Zusammenfassung**

Ein Proportional-Relaisventil (2), insbesondere für Rad- und Achsmodulatoren von EBS-Bremssystemen, umfasst einen in einem Gehäuse (4) angeordneten Relaiskolben (6), eine vom Relaiskolben betätigbare Ventileinrichtung (20), eine Entlüftung, einen Steuerdruckeingang (12), eine durch eine Steuerfläche des Relaiskolbens (6) und das Gehäuse (4) begrenzte Steuerkammer (8), die mit dem Steuerdruckeingang (12) verbunden ist, eine Auslasskammer (10) zwischen Relaiskolben (6) und Ventileinrichtung (20) mit Ausgang (16) für ausgesteuertes Druckmittel und eine Vorratsdruckkammer (26), die mit dem Ausgang für ausgesteuertes Druckmittel über die Ventileinrichtung (20) verbunden ist. Um die Gefahr von Kolbenschwingungen zu vermeiden und einen verbesserten dynamischen Druckaufbau zu erreichen, ist in der Auslasskammer (10) eine Zwischenwand (44) angeordnet, die den Relaiskolben (6) gegen ausgesteuerten Druck abschirmt und die Auslasskammer (10) in eine relaiskolbenseitige Kammer (46) und eine relaiskolbenabgewandte Relaisarbeitskammer (48) teilt, welche mit dem Ausgang (16) für ausgesteuerten Druck in Verbindung steht, wobei in der Zwischenwand (44) eine Einrichtung (50) zum Druckausgleich zwischen der relaiskolbenseitigen Kammer (46) und der Relaisarbeitskammer (48) angeordnet ist.

## Beschreibung

Die Erfindung betrifft ein Proportional-Relaisventil gemäß Oberbegriff des Anspruchs 1.

Proportional-Relaisventile der genannten Art sind bekannt. Sie werden bspw. in EBS-Rad- und Achsmodulatoren verwendet und dienen als Hauptstellglied großer pneumatischer Nennweite zum Aussteuern von Bremsdruck zu Bremszylindern, wobei z. B. von einer Steuerelektronik vorgegebene Steuerimpulse mittels Magnetventile in einen Ansteuerdruck für das Relaisventil umgesetzt werden. Der Ausgangsdruck des Proportional-Relaisventils ist proportional zu diesem Steuerdruck. Die pneumatische Ansteuerung des Relaisventils erfolgt auch durch den Druck eines Bremswertgebers. Bei den bisher eingesetzten Relaisventilen neigen die Relaiskolben zu Schwingungen, insbesondere zu Resonanzschwingungen. Ursache hierfür ist die reibungsfreie Auslegung der Bauteile zwecks geringer Hysterese der Druckübertragungskennung.

Die Aufgabe der vorliegenden Erfindung besteht darin, ein Proportional-Relaisventil der eingangs genannten Art so auszubilden, dass die Gefahr von Kolbenschwingungen vermieden ist und ein verbessertes dynamisches regeltechnisches Verhalten, insbesondere ein verbesserter dynamischer Druckaufbau erreicht wird.

Diese Aufgabe wird durch die Erfindung gemäß Anspruch 1 gelöst. Vorteilhafte und zweckmäßige Weiterbildungen der Aufgabenlösung sind in den Unteransprüchen angegeben.

Erfindungsgemäß ist in der Druckauslasskammer des Relaisventils eine abgedichtete Zwischenwand vorgesehen, die die Auslasskammer in eine relaiskolbenseitige Kammer und eine relaiskolbenabgewandte Relaisarbeitskammer teilt und die mit einer Einrichtung zum Druckausgleich, bspw. einer Blende oder Drossel, zwischen diesen beiden Kammern versehen ist. Die Zwischenwand hat die Funktion einer Prallwand und schirmt den Relaiskolben vor den dynamischen Gasströmungskräften ab. Durch die Anordnung der Zwischenwand wird eine Phasenanhebung der internen Gegenkopplung im Relaisventil erzeugt. Der ausgesteuerte Bremsdruck wirkt über die Einrichtung zum Druckausgleich zeitlich verzögert, d. h. zeitversetzt, auf den Relaiskolben, wodurch eine Phasenverschiebung der Druckschwingungen zwischen dem Relaiskolben und dem mit den Bremszylindern verbundenen Relaisarbeitsraum bewirkt wird und somit Kolbeneigenschwingungen unterdrückt werden. Der Relaiskolben übersteuert durch die erfindungsgemäße Ausbildung zunächst, was sich in einem größeren Druckgradienten, besseren Zeitverhalten und schnellerer Druckänderung im ABS-Fall äußert. Das erfindungsgemäße Relaisventil ist damit vorzüglich bei ABS-ASR-FDR-Druckstell- und Regelbetrieb in EBS-Systemen einsetzbar. Der dynamische Bremsdruckaufbau wird verbessert. Dieses Verhalten, insbesondere die Anregelzeit, kann durch die Größe des Druckausgleichsquerschnitts der Einrichtung zum Druckausgleich, bspw. der Blende oder Drossel, beeinflusst werden.

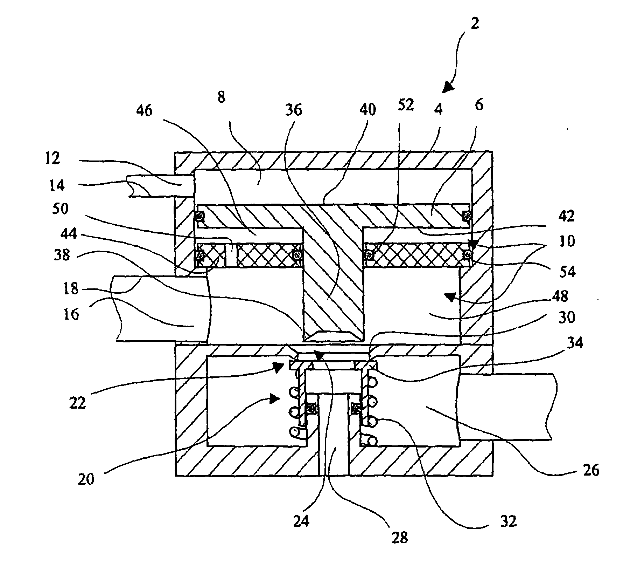

Die Erfindung soll nachfolgend anhand der beigefügten Zeichnung, in der ein Ausführungsbeispiel dargestellt ist, näher erläutert werden.

Die Zeichnung zeigt schematisch im Schnitt ein Proportional-Relaisventil 2 mit einem Gehäuse 4, in dem ein Relaiskolben 6 längsverschiebbar angeordnet ist. Das Porportional-Relaisventil 2 weist oberhalb des Relaiskolbens 6 eine Steuerkammer 8 und unterhalb des Relaiskolbens 6 eine Auslasskammer 10 auf. Über eine Steuerdruckzuleitung 12 und einen Steuerdruckanschluss 14 ist Steuerdruck der Steuerkammer 8 zuführbar bzw. aus der Steuerkammer 8 abführbar.

Die Auslasskammer 10 ist einerseits über einen Ausgangsanschluss 16 an eine zu einem Bremszylinder führende Bremsdruckleitung 18 und andererseits über eine Ventileinrichtung 20 mit Einlassventil 22 und Auslassventil 24 mit einer Vorratsdruckkammer 26, die mit einer nicht dargestellten Druckmittelquelle verbunden ist, oder mit der Atmosphäre über einen Entlüftungsanschluss 28 verbindbar.

Das Einlassventil 22 wird gebildet durch einen am Gehäuse 4 angeordneten äußeren Ventilsitz 30 und einen durch eine Feder 32 gegen den Ventilsitz 30 vorgespannten, verschiebbar geführten, hohlen Ventilkörper 34.

Der Relaiskolben 6 weist einen endseitigen Kolbenzapfen 36 auf, dessen Rand als ringförmiger, innerer Ventilsitz 38 ausgebildet ist, der zusammen mit dem Ventilkörper 34 das Auslassventil 24 bildet.

Der Relaiskolben 6 begrenzt mit seiner einen Fläche, die als Steuerfläche 40 dient, die Steuerkammer 8 und mit seiner anderen Fläche, die als Wiegefläche 42 dient, die Auslasskammer 10.

In der Auslasskammer 10 ist eine Zwischenwand 44 angeordnet, die den Kolbenzapfen 36 koaxial umschließt, mittels Dichtungen 52, 54 gegenüber dem Kolbenzapfen und dem Gehäuse abgedichtet ist und die Auslasskammer 10 in eine relaiskolbenseitige Kammer 46 und eine relaiskolbenabgewandte Relaisarbeitskammer 48 teilt, welche mit der Bremsdruckleitung 18 in Verbindung steht. Die Zwischenwand 44 weist wenigstens eine Einrichtung zum Druckausgleich zwischen der Kammer 46 und der Relaisarbeitskammer 48 auf, die hier als Öffnung bzw. Blende oder Drossel 50 gezeigt ist, über die die Kammer 46 mit der Relaisarbeitskammer 48 in Verbindung steht. Die Einrichtung 50 kann auch ein Rückschlagventil sein.

Das Proportional-Relaisventil 2 hat folgende Funktionsweise:

Es sei zunächst angenommen, dass in der Steuerkämmer 8, im an die Bremsdruckleitung 18 angeschlossenen Verbraucherkreis und in der Auslasskammer 10 Atmosphärendruck herrscht. In diesem Zustand ist das Einlassventil 22 geschlossen und das Auslassventil 24 durch eine nicht näher bezeichnete Rückstellfeder geöffnet, was in der Zeichnung dargestellt ist. Ein der Steuerkammer 8 zugeführter Steuerdruck beaufschlagt die Steuerfläche 40 des Relaiskolbens 6 und verschiebt diesen unter Mitnahme des Ventilsitzes 38. Im Verlaufe der Verschiebung setzt der Ventilsitz 38 auf den Ventilkörper 34 auf und nimmt diesen mit. Dabei wird das Auslassventil 24 geschlossen und das Einlassventil 22 geöffnet. Durch das mittels des Relaiskolbens 6 geöffnete Einlassventil 22 wird die Vorratsdruckkammer 26 mit der Relaisarbeitskammer 48 verbunden, wodurch das in der Vorratsdruckkammer 26 anstehende Druckmittel über den Ausgangsanschluss 16 und die Bremsdruckleitung 18 in den Verbraucherkreis, bspw. einen Bremszylinder, strömen kann. Über die Blende oder Drossel 50 erfolgt zeitlich verzögert ein Druckausgleich zwischen der Relaisarbeitskammer 48 und der relaiskolbenseitigen Kammer 46 bis der auf die Wiegefläche 42 des Relaiskolbens 6 wirkende Druck mit dem auf die Steuerfläche 40 wirkenden Steuerdruck ins Gleichgewicht gebracht worden ist. Die Zwischenwand 44 mit Blende 50 bewirkt somit, dass die Druckmittel-Strömungskräfte zeitlich verzögert auf den Relaiskolben 6 wirken. Bei diesem Gleichgewicht bewegt sich der Relaiskolben 6 durch die Ventilfeder 32 soweit zurück, dass gleichzeitig das Auslassventil 24 und das Einlassventil 22 geschlossen sind.

Stehen der Verbraucherkreis und die Auslasskammer 10 bzw. der Relaisarbeitsraum 48 bereits unter Verbraucherdruck und wird zum Zwecke der Erhöhung dieses Druckes ein höherer Steuerdruck zugeführt, so wirken der Relaiskolben 6 und die Ventileinrichtung 20 ausgehend von der Abschlussstellung, entsprechend der soeben beschriebenen Weise zusammen.

Wird Steuerdruck aus der Steuerkammer 8 abgeführt, so wird der Relaiskolben 6 von dem zunächst überwiegenden Verbraucherdruck über die Wiegefläche 42 bewegt, wobei sich das Auslassventil 24 öffnet und Druckmittel aus dem Verbraucherkreis und der Auslasskammer 10 bzw. der Kammer 46 und der Relaisarbeitskammer 48 über den hohlen Innenraum des Ventilkörpers 34 in die Atmosphäre entweicht. Beim Wiederherstellen des Gleichgewichts am Relaiskolben 6 durch Abbau des Verbraucherdruckes gehen Relaiskolben 6 und Ventilsitz 38 in die die Abschlussstellung der Ventileinrichtung 20 bestimmende Lage zurück.

## Patentansprüche

1. Proportional-Relaisventil, insbesondere für Rad- und Achsmodulatoren von EBS-Bremssystemen, mit
- einem in einem Gehäuse angeordneten, längsbeweglichen Relaiskolben,
- einer vom Relaiskolben betätigbaren Ventileinrichtung mit Einlass- und Auslassventil,
- einem Entlüftungskanal, der in der Entlüftungsposition der Ventileinrichtung an einen Entlüftungsanschluss angeschlossen ist,
- einem Steuerdruckeingang,
- einer durch eine Steuerfläche des Relaiskolbens und das Gehäuse begrenzten Steuerkammer, die mit dem Steuerdruckeingang verbunden ist,
- einer Auslasskammer zwischen Relaiskolben und Ventileinrichtung mit einem Ausgang für ausgesteuertes Druckmittel und
- einer Vorratsdruckkammer, die mit einem Vorratsdruckeingang in Verbindung steht und die mit dem Ausgang für ausgesteuertes Druckmittel über die Ventileinrichtung verbunden ist,
**dadurch gekennzeichnet, dass** in der Auslasskammer (10) eine Zwischenwand (44) angeordnet ist, die den Relaiskolben (6) gegen ausgesteuerten Druck abschirmt und die Auslasskammer in eine relaiskolbenseitige Kammer (46) und eine relaiskolbenabgewandte Relaisarbeitskammer (48) teilt, welche mit dem Ausgang für den ausgesteuerten Druck in Verbindung steht, und
dass in der Zwischenwand (44) eine Einrichtung (50) zum Druckausgleich zwischen der relaiskolbenseitigen Kammer (46) und der Relaisarbeitskammer (48) angeordnet ist, derart, dass Druckmittelströmungskräfte über die Zwischenwand mit Druckausgleicheinrichtung mit zeitlicher Verzögerung auf den Relaiskolben (6) wirken.

2. Proportional-Relaisventil nach Anspruch 1, **dadurch gekennzeichnet, dass** die Zwischenwand (44) einen Relaiskolbenzapfen (36) koaxial umschließt.

3. Proportional-Relaisventil nach Anspruch 1 oder 2, **dadurch gekennzeichnet, dass** die Zwischenwand (44) gegenüber dem Relaiskolben (6) bzw. dem Relaiskolbenzapfen (36), dem Gehäuse und der Zylinderwand (51) abgedichtet ist.

4. Proportional-Relaisventil nach einem der Ansprüche 1-3, **dadurch gekennzeichnet, dass** die Einrichtung (50) zum Druckausgleich durch wenigstens eine die Kammern (46 und 48) verbindende Öffnung, Drossel oder Blende gebildet ist.

5. Proportional-Relaisventil nach einem der Ansprüche 1-3, **dadurch gekennzeichnet, dass** die Einrichtung (50) zum Druckausgleich durch wenigstens ein Rückschlagventil gebildet ist.

6. Proportional-Relaisventil nach einem der vorhergehenden Ansprüche, **dadurch gekennzeichnet, dass** der Druckausgleichsquerschnitt der Einrichtung (50) zum Druckausgleich zwischen den Kammern (46 und 48) einstellbar ist.

7. Die Zwischenwand (44) hält die Gasströmungskräfte vom Kolben (6) zeitlich verzögert zurück.
